# EUROPÄISCHE PATENTSCHRIFT

(11) **EP 2 953 812 B1**
(45) Veröffentlichungstag und Bekanntmachung des Hinweises auf die Patenterteilung: **30.05.2018**
(21) Anmeldenummer: 14701677.8
(22) Anmeldetag: 24.01.2014
(51) Int. Cl.: B60L 11/18, H01F 38/14, H01F 27/02

(54) **VORRICHTUNG MIT WICKLUNGSANORDNUNG UND ANORDNUNG, INSBESONDERE LADESTATION, ZUR BERÜHRUNGSLOSEN ENERGIEÜBERTRAGUNG AN EIN ELEKTRO-FAHRZEUG, MIT EINER WICKLUNGSANORDNUNG**
DEVICE HAVING A WINDING ARRANGEMENT AND ARRANGEMENT, IN PARTICULAR A CHARGING STATION, FOR CONTACTLESS TRANSFER OF ENERGY TO AN ELECTRIC VEHICLE, HAVING A WINDING ARRANGEMENT
DISPOSITIF COMPRENANT UN ENSEMBLE ENROULEMENT ET SYSTÈME, EN PARTICULIER STATION DE CHARGE, POUR TRANSFÉRER DE L'ÉNERGIE SANS CONTACT À UN VÉHICULE ÉLECTRIQUE, COMPRENANT UN ENSEMBLE ENROULEMENT

(30) Priorität: 11.02.2013 DE 102013002226; 27.06.2013 DE 102013010695
(43) Veröffentlichungstag der Anmeldung: 16.12.2015
(73) Patentinhaber: Sew-Eurodrive GmbH & Co. KG, 76646 Bruchsal (DE)
(72) Erfinder: BÖSER, Andreas, 76698 Ubstadt-Weiher (DE); KREMPEL, Thomas, 76707 Hambrücken (DE); SCHMIDT, Josef, 76676 Graben-Neudorf (DE); SCHROEDER, Detlev, 68809 Neulussheim (DE)
(86) Internationale Anmeldenummer: PCT/EP2014/000184
(87) Internationale Veröffentlichungsnummer: WO 2014/121897

(56) Entgegenhaltungen:
- DE-A1-102006 025 460
- DE-A1-102011 106 027
- GB-A- 2 492 824
- GB-A- 2 492 825
- US-A- 6 060 977
- US-A1- 2010 097 168
- US-A1- 2012 091 989

## Beschreibung

Die Erfindung betrifft eine Vorrichtung mit Wicklungsanordnung und eine Anordnung, zur berührungslosen Energieübertragung an ein Elektro-Fahrzeug, mit einer Wicklungsanordnung.
Es ist allgemein bekannt, dass bei einer Flachwicklung Windungen eine flächige Anordnung bilden, also in einer Wicklungsfläche angeordnet sind.
Aus der WO 2013/000593 A1 ist eine Flachspule für berührungslose, also kontaktlose Energieübertragung bekannt.
Aus der DE 10 2011 106 027 A1 ist als nächstliegender Stand der Technik ein Transformatorteil für ein Übertragungssystem zum Laden der Traktionsbatterien eines elektrisch angetriebenen Kraftfahrzeugs.
Aus der US 2012/091989 A1 ist ein Leistungszuführungssystem bekannt.
Der Erfindung liegt daher die Aufgabe zugrunde, eine Vorrichtung mit Wicklungsanordnung geschützt anzuordnen.
Erfindungsgemäß wird die Aufgabe bei der Vorrichtung nach den in Anspruch 1 und bei der Anordnung nach den in Anspruch 10 angegebenen Merkmalen gelöst.

Von Vorteil ist dabei, dass die Gewichtskraft eines auf dem Deckelteil parkenden Fahrzeugs abgeleitet wird von der Ferritschicht, also vorbeigeleitet an der Ferritschicht. Denn sie wird durch die Lücken in der Ferritschicht hindurchgeleitet.

Bei einer nicht in den Ansprüchen erwähnten, vorteilhaften Ausgestaltung weist das auf dem Boden aufliegende Bodenteil eine Wandstärke oder Höhe auf, die innerhalb der Auflagefläche auf dem Boden von außen nach zur Mitte der Auflagefläche hin zunimmt, insbesondere so dass das Bodenteil eine gewölbte Form aufweist und Wasser nach außen abfließt. Von Vorteil ist dabei, dass Wasserschäden vermeidbar sind und auch nach Eindringen von Wasser oder Überflutung des Bodens, insbesondere Hochwasser, ein schnelles Abfließen erreichbar ist.

Bei einer nicht in den Ansprüchen erwähnten, vorteilhaften Ausgestaltung ist das auf einem ebenen Boden aufliegende Bodenteil hügelartig ausgebildet und/oder weist eine gewölbte Struktur auf, insbesondere wobei das Maximum des gewölbten Verlaufs mittig im Bodenteil angeordnet ist. Von Vorteil ist dabei, dass eine einfache Fertigung des Bodenteils als Spritzgussteil ermöglicht ist.

Bei einer nicht in den Ansprüchen erwähnten, vorteilhaften Ausgestaltung weist das Bodenteil die Form eines Pyramidenstumpfes auf. Von Vorteil ist dabei, dass eine einfache Fertigung des Bodenteils als Spritzgussteil ermöglicht ist und/oder bei der Herstellung die Ferritplatten in einfacher Weise am Bodenteil, also Pyramidenstumpf, verlegbar sind.

Bei einer nicht in den Ansprüchen erwähnten, vorteilhaften Ausgestaltung ist das Deckelteil, insbesondere mittels formschlüssig und/oder kraftschlüssig mit dem Boden verbundene Dübel schraubverbunden, verbunden mit dem Boden, auf welchem das Bodenteil aufliegt. Von Vorteil ist dabei, dass eine einfache Befestigung ermöglicht ist.

Bei einer nicht in den Ansprüchen erwähnten, vorteilhaften Ausgestaltung ist das Deckelteil mit dem Bodenteil dicht verbunden, indem ein Randabschnitt, insbesondere also ein Kragenrand, des Deckelteils das Bodenteil auf einen am äußeren Rand des Bodenteils umlaufenden Bereich drückt und diesen verformt. Insbesondere ist dabei das Bodenteil im am äußeren Rand des Bodenteils umlaufenden Verformungsbereich gegen den Boden gedrückt. Von Vorteil ist dabei, dass eine hohe Schutzwirkung in einfacher Weise erzielbar ist.

Bei einer in den Ansprüchen erwähnten, vorteilhaften Ausgestaltung ist der Wicklungsdraht der Wicklungsanordnung in entsprechende Vertiefungen eingeklipst verbunden. Von Vorteil ist dabei, dass eine einfache Verlegetechnik für den Wicklungsdraht anwendbar ist und der Wicklungsdraht in einfacher Weise in Position haltbar ist.

Bei einer in den Ansprüchen erwähnten, vorteilhaften Ausgestaltung weist das Bodenteil eine Ausnehmung, insbesondere eine mittig angeordnete Ausnehmung, auf, in welcher ein Elektronikteil angeordnet ist,
insbesondere wobei die Wicklungsdrahtenden der Wicklungsanordnung mit Anschlussvorrichtungen des Elektronikteils elektrisch verbunden sind. Von Vorteil ist dabei, dass das Elektronikteil gut und einfach schützbar ist.

Bei einer in den Ansprüchen erwähnten, vorteilhaften Ausgestaltung sind die Ausnehmungen, insbesondere Lücken, und Tragdome in einer regelmäßigen flächigen Gitterstruktur angeordnet, insbesondere wobei die Gitterstruktur aus zueinander parallele, voneinander regelmäßig beabstandeten Reihen gebildet ist, wobei die Abstände innerhalb der jeweiligen Reihe gleichmäßig ist und zueinander nächstbenachbarte Reihen jeweils einen Versatz zueinander aufweisen,
insbesondere wobei die die Ausnehmungen, insbesondere Lücken, und Tragdome jeweils rechteckförmig ausgeführt sind. Von Vorteil ist dabei, dass die Tragdome die Belastungskräfte auf sich konzentrieren und somit die Ferritschicht geschützt ist. Die Regelmäßigkeit der Gitterstruktur bewirkt insgesamt eine gleichmäßige Kraftverteilung, also eine gleichmäßige Auslastung jedes Tragdoms. Somit sind alle Tragdome möglichst gleich stark belastet. Außerdem wird der Magnetfluss nur wenig gehindert durch die Ausnehmungen.

Bei einer in den Ansprüchen erwähnten, vorteilhaften Ausgestaltung weisen die Wicklungsanordnungen Überkreuzungen von Wicklungsdrähten auf, die in jeweiligen Vertiefungen im Träger, also Wicklungsträger, ausgeführt und/oder angeordnet sind, welche vom äußeren Rand nach innen monoton ansteigen, insbesondere so dass Wasser abfließen kann aus dem inneren Bereich zum äußeren Rand hin. Von Vorteil ist dabei, dass das Risiko elektrischer Kurzschlüsse verminderbar ist.

Bei einer in den Ansprüchen erwähnten, vorteilhaften Ausgestaltung ist die Ferritschicht im Wesentlichen aus gleichartigen Ferritplatten, insbesondere jeweils quaderförmigen Ferritplatten, aufgebaut,
wobei die Ferritplatten in zueinander parallel angeordneten Reihen angeordnet sind, wobei die in direkt zueinander benachbarten Reihen die Ferritplatten einen Versatz aufweisen,
insbesondere wobei zwischen zwei Lücken zumindest zwei Ferritplatten zwischengeordnet sind,
insbesondere wobei zum Reihenabschluss im Vergleich zu den gleichartigen Ferritplatten kürzere Ferritplatten verwendbar sind. Von Vorteil ist dabei, dass ein einfacher Aufbau und ein optimierter Randabschluss ermöglicht ist.

Bei einer in den Ansprüchen erwähnten, vorteilhaften Ausgestaltung sind Träger und Bodenteil einstückig, also einteilig, ausgeführt. Von Vorteil ist dabei, dass weniger Teile notwendig sind.

Bei einer in den Ansprüchen erwähnten, vorteilhaften Ausgestaltung weist die Wicklungsanordnung Teilwicklungen auf,
wobei jeder Windung einer ersten Teilwicklung eine Windung einer zweiten Teilwicklung zugeordnet ist,
wobei zwischen jeder Windung der ersten Teilwicklung und der ihr nachfolgenden Windung der ersten Teilwicklung eine Zwischenfläche umschlossen ist, die gleich groß ist zu der zwischen den beiden jeweils zugeordneten Windungen der zweiten Teilwicklung umschlossenen Zwischenfläche,
wobei jeweils die von der Windung der ersten Teilwicklung umschlossene Fläche der von der jeweils zugeordneten Windung der zweiten Teilwicklung umschlossene Fläche gleicht
insbesondere wobei jede Windung der ersten Teilwicklung eine Anzahl von Überkreuzungen mit der zugeordneten Windung der zweiten Teilwicklung aufweist. Von Vorteil ist dabei, dass mittels der Überkreuzungen die einander entsprechenden Windungen der Teilwicklung jeweils dieselbe umwickelte Fläche aufweisen und somit die Teilwicklungen dieselbe Induktivität aufweisen. Unter den einander entsprechenden Windungen sind dabei diejenigen Windungen jeder Teilwicklung zu verstehen, welche dieselbe Ordnungszahl aufweisen. Beispielsweise entsprechen sich also die jeweils erste Windung jeder Teilwicklung, also die Windung, welche die kleinste umwickelte Fläche aufweisen. Ebenso entsprechen sich die beiden zweiten Windungen der beiden Teilwicklungen und weisen die zweitkleinste umwickelte Fläche auf. Ebenso entsprechen sich auch die jeweils letzten Windungen der beiden Teilwicklungen und weisen dabei jeweils die größte umwickelte Fläche auf, wobei diese jeweils denselben Flächenwert aufweist.

Bei einer nicht in den Ansprüchen erwähnten, vorteilhaften Ausgestaltung weist diese Zwischenfläche, also Flächendifferenz, zwei Anteile auf, wobei der erste Anteil an den Längsseiten und der andere Anteil an den Querseiten der jeweiligen Windung angeordnet ist,
insbesondere wobei bei einer rechteckförmigen Ausführung jeder Windung sich somit diese Flächendifferenz gleichmäßig in Querrichtung und gleichmäßig in Längsrichtung aufteilt,
insbesondere wobei das Verhältnis der Anteile dabei dem Verhältnis von Länge zu Breite des Rechtecks entspricht. Von Vorteil ist dabei, dass eine gleichmäßige Aufteilung ermöglicht ist und somit ein möglichst homogener Feldverlauf entlang der von der Wicklungsanordnung umwickelten Fläche erreichbar ist.

Bei einer nicht in den Ansprüchen erwähnten, vorteilhaften Ausgestaltung weist die Wicklungsanordnung der Vorrichtung Teilwicklungen auf,
wobei jeder Windung einer ersten Teilwicklung eine Windung einer zweiten Teilwicklung zugeordnet ist,
wobei zwischen jeder Windung der ersten Teilwicklung und der ihr nachfolgenden Windung der ersten Teilwicklung eine Fläche umschlossen ist, die gleich groß ist zu der zwischen den beiden jeweils zugeordneten Windungen der zweiten Teilwicklung umschlossenen Fläche,
wobei jeweils die von der Windung der ersten Teilwicklung umschlossene Fläche der von der jeweils zugeordneten Windung der zweiten Teilwicklung umschlossene Fläche gleicht
insbesondere wobei jede Windung der ersten Teilwicklung eine Anzahl von Überkreuzungen mit der zugeordneten Windung der zweiten Teilwicklung aufweist. Von Vorteil ist dabei, dass die von den jeweils zueinander zugeordneten Windungen umschlossenen Flächen gleich sind. Dies gilt auch für die direkt nachfolgende, also in der Wicklung jeweils nächste, Windung jeder Teilwicklung. Aber auch die Flächendifferenz zwischen der Windung und der ihr nachfolgenden Windung ist bei den beiden Teilwicklungen gleich.

Bei einer nicht in den Ansprüchen erwähnten, vorteilhaften Ausgestaltung weist diese Flächendifferenz zwei Anteile auf, wobei der erste Anteil an den Längsseiten und der andere Anteil an den Querseiten angeordnet ist. Bei einer im Wesentlichen rechteckförmigen Ausführung jeder Windung teilt sich somit diese Flächendifferenz gleichmäßig in Querrichtung und gleichmäßig in Längsrichtung auf, was zu einem besonders homogenen Magnetfeldverlauf führt. Das Verhältnis der Anteile entspricht dabei dem Verhältnis von Länge zu Breite des Rechtecks.

Bei einer nicht in den Ansprüchen erwähnten, vorteilhaften Ausgestaltung weist die Wicklungsanordnung Teilwicklungen auf,
wobei jeder Windung einer ersten Teilwicklung eine Windung einer zweiten Teilwicklung zugeordnet ist,
wobei jede Windung der ersten Teilwicklung eine Anzahl von Überkreuzungen mit der zugeordneten Windung der zweiten Teilwicklung aufweist,
insbesondere wobei jeweils die von der Windung der ersten Teilwicklung umwickelte Fläche der von der jeweils zugeordneten Windung der zweiten Teilwicklung umwickelte Fläche gleicht. Von Vorteil ist dabei, dass trotz der Ausführung als Flachwicklung mittels der Überkreuzungen die von den Teilwicklungen jeweils umwickelte Fläche gleichgroß ausführbar ist. Somit sind die Induktivitäten der parallel schaltbaren Teilwicklungen gleich groß und die Ströme gleich und somit das Magnetfeld homogen.

Ein metallischer Fremdkörper, welcher im von der Wicklung erzeugten Magnetfeld sich befindet, wird infolge von Wirbelströmen und deren Ohmschen Verlusten erhitzt. Die Homogenität des Magnetfeldes bewirkt, dass die Temperatur dabei unabhängig von der Wicklungsflächenposition ist. Somit ist zur Energieübertragung an eine über der Flachwicklung herangefahrene Sekundärwicklung ein maximaler Strom in die Wicklungsanordnung einprägbar, so dass zwar eine vorgegebene Spitzentemperatur des Fremdkörpers nicht überschritten wird, aber eine maximale Leistung übertragbar ist.

Weiterer Vorteil ist bei der erfindungsgemäßen Spule, dass infolge des symmetrischen Aufbaus der beiden Teilwicklungen eine Positionsdifferenz zur mittigen Position eines Elektrofahrzeugs mit Sekundärwicklung über der Wicklungsanordnung, also eine Abweichung aus der Position stärkster Kopplung zwischen Wicklungsanordnung und Sekundärwicklung, einfach erkennbar ist, indem der jeweilige Strom in den beiden Teilwicklungen detektiert wird. Denn aufgrund des Versatzes von Sekundärspule und Primärspule werden Induktivitäten erzeugt, die in den Teilwicklungen unterschiedlich groß sind. Wenn also das Fahrzeug zu weit nach vorne eingeparkt wurde, ist der Strom in der ersten Teilwicklung größer als der Strom in der zweiten Teilwicklung. Wenn das Fahrzeug zu weit nach hinten eingeparkt wurde, ist der Strom in der ersten Teilwicklung kleiner als der Strom in der zweiten Teilwicklung.

Bei einer nicht in den Ansprüchen erwähnten, vorteilhaften Ausgestaltung ist die Anzahl der Überkreuzungen gerade. Von Vorteil ist dabei, dass eine symmetrische Anordnung in einfacher Weise herstellbar ist.

Bei einer nicht in den Ansprüchen erwähnten, vorteilhaften Ausgestaltung verläuft der Wicklungsdraht der jeweiligen Windung der ersten Teilwicklung vor einer Überkreuzung innerhalb und nach der Überkreuzung außerhalb der jeweils zugeordnete Windung der zweiten Teilwicklung
oder
der Wicklungsdraht der jeweiligen Windung der ersten Teilwicklung verläuft vor einer Überkreuzung außerhalb und nach der Überkreuzung innerhalb der jeweils zugeordnete Windung der zweiten Teilwicklung verläuft:. Von Vorteil ist dabei, dass mittels der Überkreuzung eine symmetrische Wicklungsanordnung in einfacher Weise herstellbar ist.

Bei einer nicht in den Ansprüchen erwähnten, vorteilhaften Ausgestaltung sind die Überkreuzungen in Windungsrichtung einer jeweiligen Windung der ersten und/oder zweiten Teilwicklung regelmäßig voneinander beabstandet. Von Vorteil ist dabei, dass wiederum eine symmetrische Wicklungsanordnung in einfacher Weise herstellbar ist.

Bei einer nicht in den Ansprüchen erwähnten, vorteilhaften Ausgestaltung ist der Abstand zwischen einer jeweiligen Windung der ersten Teilwicklung und der jeweils zugeordneten Windung der zweiten Teilwicklung konstant. Von Vorteil ist dabei, dass eine möglichst große Fläche für die Wicklungsanordnung vorsehbar ist und außerdem ein möglichst homogenes Magnetfeld bewirkbar ist.

Bei einer nicht in den Ansprüchen erwähnten, vorteilhaften Ausgestaltung sind die Teilwicklungen miteinander elektrisch parallel geschaltet. Von Vorteil ist dabei, dass eine gleichmäßige Bestromung erreichbar ist und somit ein möglichst homogenes Magnetfeld.

Bei einer nicht in den Ansprüchen erwähnten, vorteilhaften Ausgestaltung sind die Teilwicklungen jeweils Flachwicklungen, insbesondere wobei die Flachwicklung jeweils innerhalb einer Wicklungsfläche angeordnet ist, insbesondere wobei die Wicklungsfläche gekrümmt verläuft. Von Vorteil ist dabei, dass Wasser aus der Mitte der Wicklung abfließen kann, wenn die Fläche konvex gekrümmt ist, also von der Spulenmittel zum Spulenrand abfällt. Auch wenn die Wicklung durch ein Gehäuseteil konstanter Wandstärke, beispielsweise ein Deckelteil abgedeckt ist bleibt dann dieser Vorteil des Wasserabfließens erhalten. Das Maximum der Wicklungsfläche ist dabei im Gravitationsfeld oben angeordnet und der Rand der bewickelten Fläche unten.

Bei einer nicht in den Ansprüchen erwähnten, vorteilhaften Ausgestaltung sind die Teilwicklungen mit Ausnahme der Bereiche der Überkreuzung und/oder der Bereiche der Herausführung der Wicklungsdrahtendbereiche ebene Wicklungen. Von Vorteil ist dabei, dass eine einfache Herstellung ermöglicht ist.

Bei einer nicht in den Ansprüchen erwähnten, vorteilhaften Ausgestaltung ist als Wicklungsdraht Litze verwendet, insbesondere wobei die Litze als Bündel von gegeneinander elektrisch isolierten Einzeldrähten ausgeführt ist,
insbesondere wobei die Litze Rundlitze ist, insbesondere also das Bündel im Wesentlichen einen runden Querschnitt aufweist. Von Vorteil ist dabei, dass ein einfacher und kostengünstiger Wicklungsdraht verwendbar ist. Durch Verwendung eines isolierten Mantels ist sicherstellbar, dass die Wicklung und Elektronik witterungsbeständig ist.

Wichtige Merkmale bei der Anordnung, insbesondere Ladestation, zur berührungslosen Energieübertragung an ein Elektro-Fahrzeug, mit einer vorgenannten Wicklungsanordnung sind, dass von einer Wechselstromquelle ein Wechselstrom in die parallel geschalteten Teilwicklungen eingeprägt wird,
wobei das Fahrzeug an seiner Unterseite eine Sekundärwicklung aufweist, welche induktiv koppelbar ist an die Wicklungsanordnung. Von Vorteil ist dabei, dass Energie berührungslos übertragbar ist und wegen des homogenen Magnetfeldverlaufs die induktive Kopplungsstärke von Verschiebungen des Fahrzeugs nur geringfügig abhängt.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist eine spiralförmige Flachwicklung gezeigt, insbesondere aus Rundlitze, wobei der Wicklungsdraht aus einem Bündel elektrisch gegeneinander isolierter Einzeldrähte besteht..
In der Figur 2 ist eine aus zwei Teilwicklungen zusammensetzbare spiralförmige Flachwicklung gezeigt, wobei die Teilwicklungen voneinander beabstandet sind
In der Figur 3 ist eine erfindungsgemäße Wicklungsanordnung, die als spiralförmige Flachwicklung ausgeführt ist, schematisch dargestellt.
In der Figur 4 ist ein stationärer Teil der Ladestation für Elektrofahrzeuge in Schrägansicht gezeigt.
In der Figur 5 ist ein zugehöriger Querschnitt gezeigt.
In der Figur 6 ist ein zugehöriger Längsschnitt gezeigt.
In der Figur 7 ist der stationäre Teil in Explosionsdarstellung gezeigt.

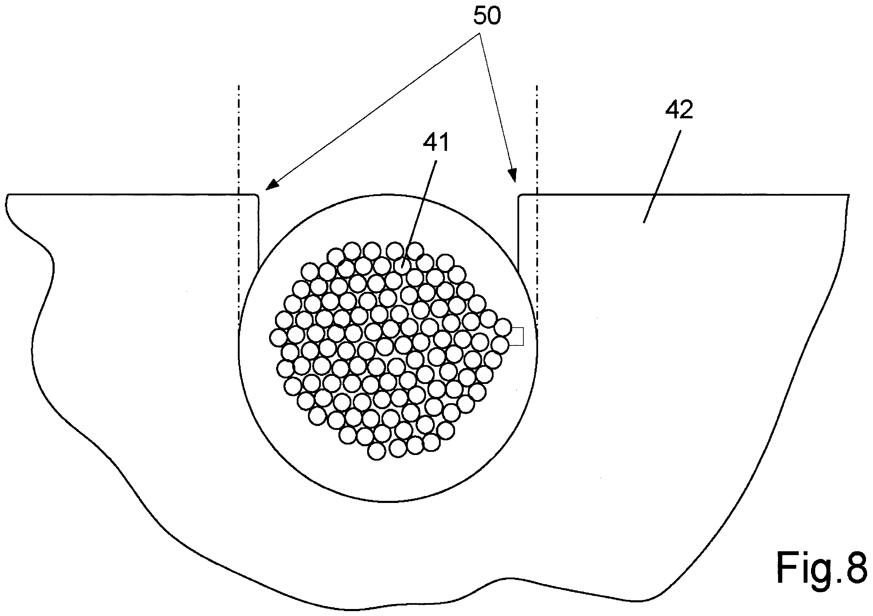

In der Figur 8 ist die Aufnahme des Primärleiters 41 im Wicklungsträger 42 mittels Hinterschnitt 50 gezeigt.

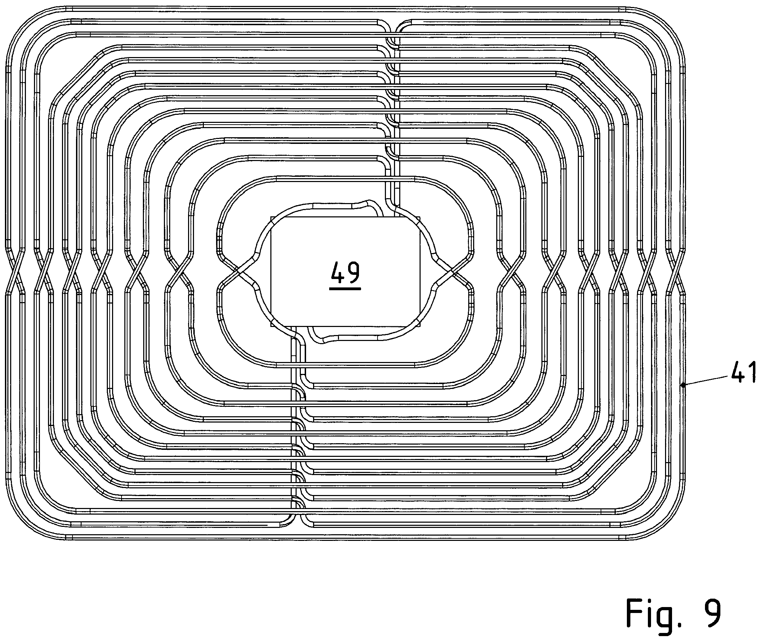

In der Figur 9 ist die Wicklungsanordnung 41 in Draufsicht dargestellt.

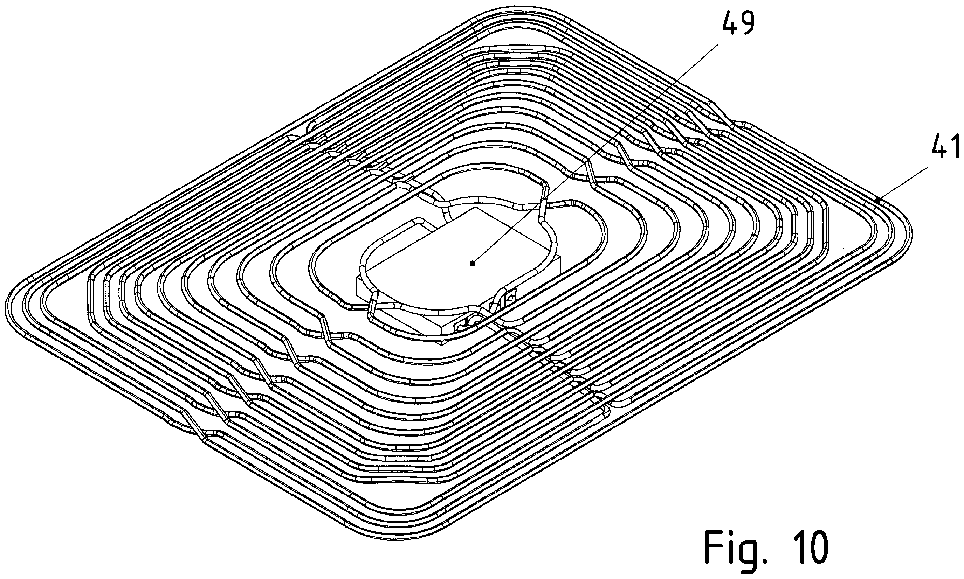

In der Figur 10 ist die Wicklungsanordnung 41 in Schrägansicht dargestellt.

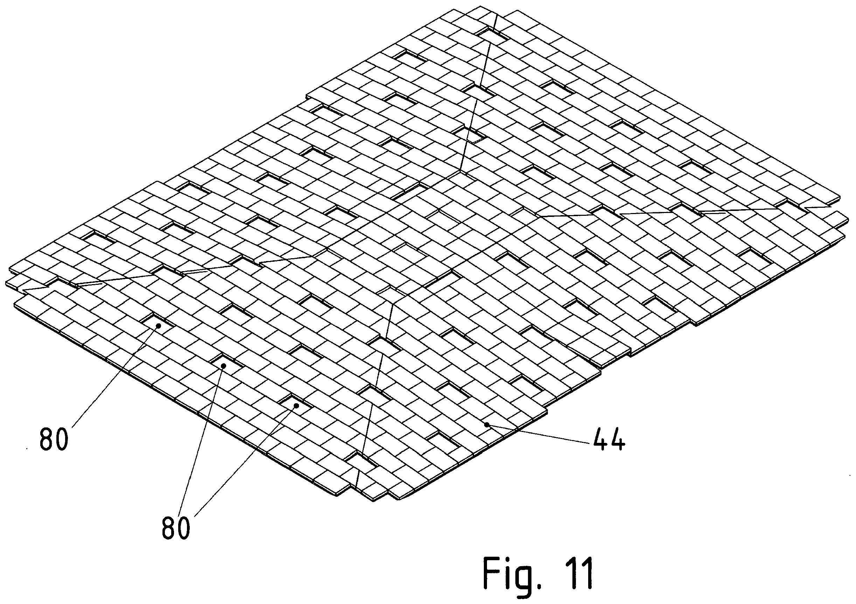

In der Figur 11 ist die Ferritplattenschicht 44 mit Lücken, also Ausnehmungen, 80 dargestellt.

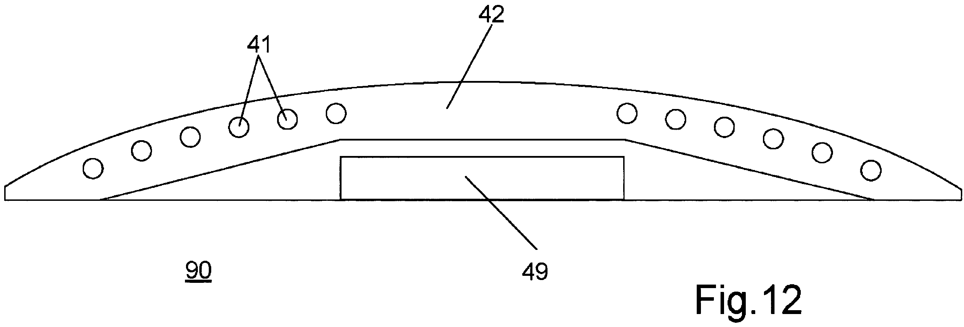

In der Figur 12 ist der schematische Aufbau des stationären Teils gezeigt, so dass klar ist, dass dieser auf der Bodenfläche 90 angeordnet ist und eine gewölbte Oberfläche aufweist, wobei im Inneren ein Elektronikteil 49 geschützt angeordnet ist.

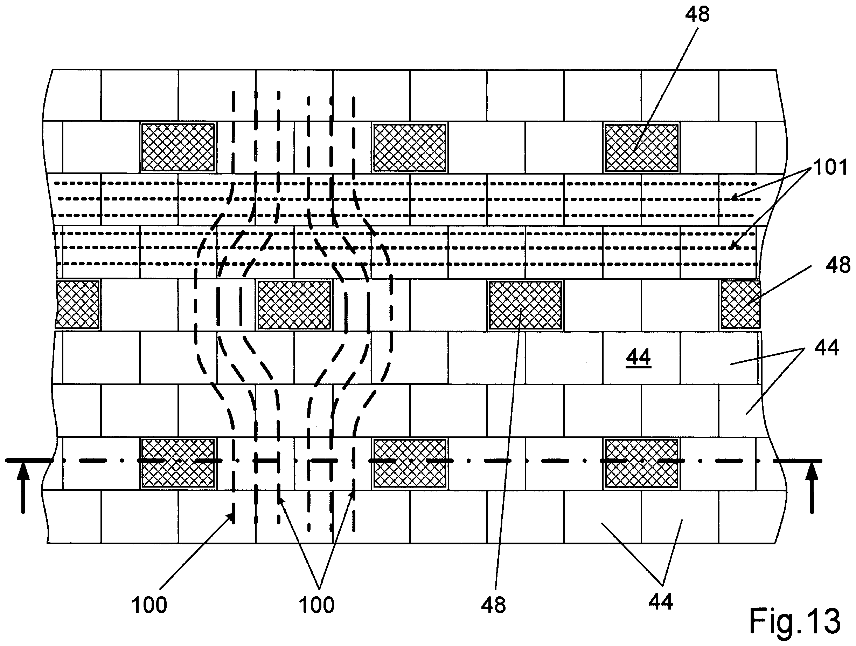

In der Figur 13 ist der Magnetfluss innerhalb der Ferritplattenschicht 44 beispielhaft für zwei Varianten dargestellt, wobei entweder in Längsrichtung Feldlinien 101 ungestört und geradlinig sich ausbreiten können oder in Querrichtung Feldlinien 100 um die mit Kunststoff-Tragdomen 48 ausgefüllten Ausnehmungen 80 herumfließen müssen. Somit ist klar gemacht, dass der Magnetfluss in beiden Richtungen ohne besondere Hindernisse sich ausbreiten kann. Dabei ist auch gezeigt, dass die Tragdome 48 innerhalb der Ferritplattenschicht 44 regelmäßig angeordnet sind und somit ein ebenes Gitter bilden, das aus parallel zueinander angeordneten, voneinander gleichmäßig beabstandeten Reihen gebildet ist, welche gleichartig ausgeführt sind und entlang derer jeweils die Tragdome 48 regelmäßig voneinander beabstandet sind mit einer ersten Gitterkonstanten, wobei direkt benachbarte Reihen einen Versatz in Reihenrichtung aufweisen, insbesondere um einen halben ersten Gitterkonstantenwert. Dabei sind die Ferritplatten 44 alle gleich ausgeführt und ebenfalls in zur jeweils direkt benachbarten Reihe einen Versatz aufweisenden Reihen angeordnet. Alle genannten Reihen sind gerade ausgebildet.

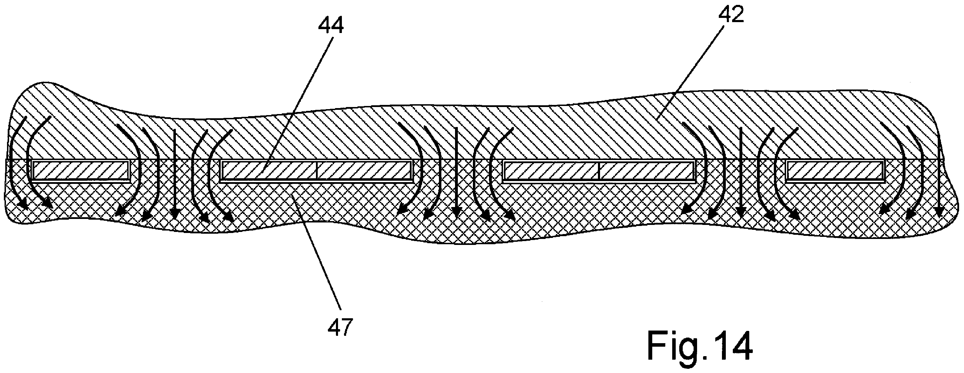

In der Figur 14 ist ein schematischer Schnitt gezeigt, der die durch ein auf dem stationären Teil eingeparktes Fahrzeug erzeugten Kraftlinien darstellt, wobei deutlich wird, dass die Ferritplatten 44 nicht belastet werden, weil die Kraftlinien von den Tragdomen 48 herumgeleitet werden.

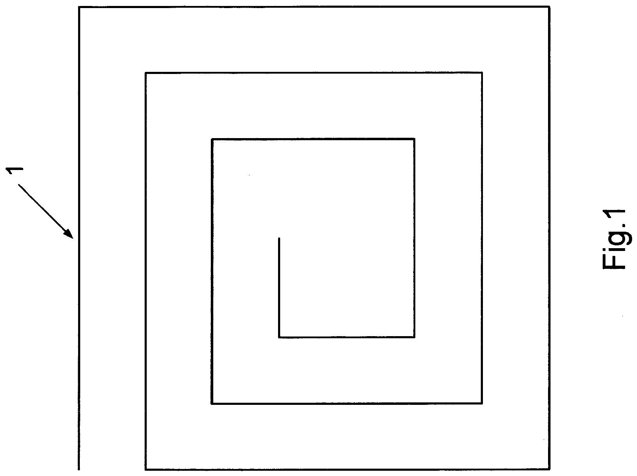

In der Figur 1 ist eine spiralförmige Flachwicklung gezeigt, insbesondere aus Rundlitze, wobei der Wicklungsdraht 1 aus einem Bündel elektrisch gegeneinander isolierter Einzeldrähte besteht, also aus HF-Litze.

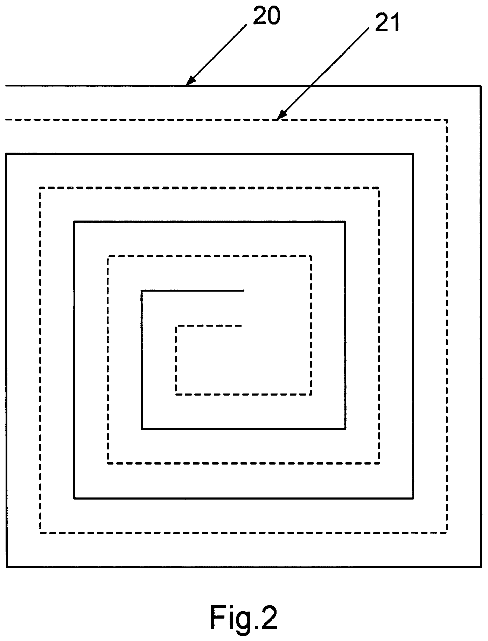

In der Figur 2 ist eine aus zwei Teilwicklungen zusammensetzbare spiralförmige Flachwicklung gezeigt, wobei die Teilwicklungen voneinander beabstandet sind. Der Wicklungsdraht 20 der ersten Teilwicklung ist mit durchgezogener Linie und der Wicklungsdraht 21 der zweiten Teilwicklung ist mit gestrichelter Linie dargestellt.

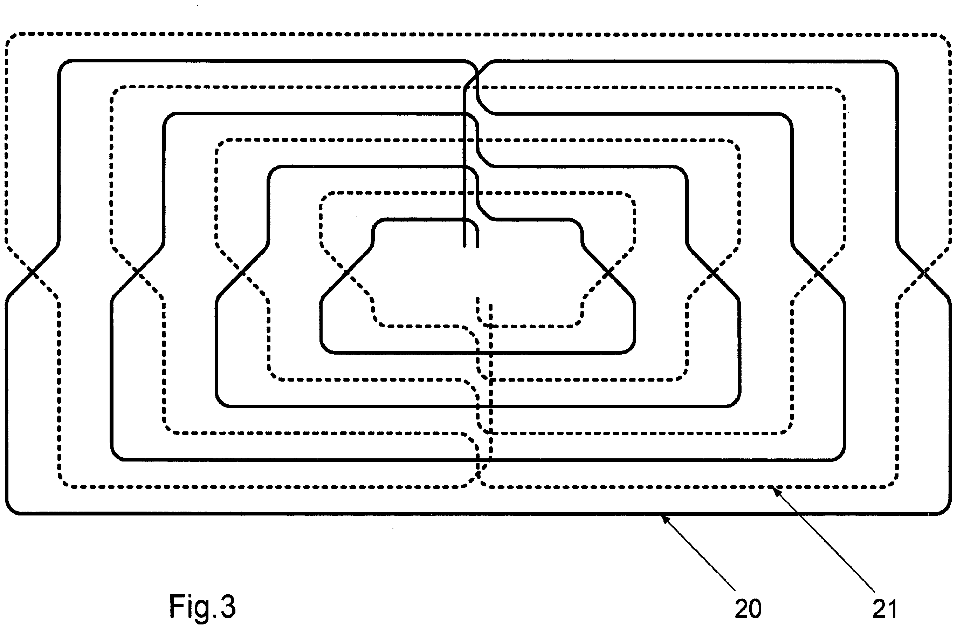

In der Figur 3 ist eine erfindungsgemäße spiralförmige Flachwicklung gezeigt.

Wie in Figur 1 gezeigt, ist eine Flachwicklung, also quasi-zweidimensionale Wicklung, rechteck-spiralförmig ausführbar, wobei zwischen den jeweils benachbarten Windungen der Wicklung ein Abstand ausgeführt ist, der größer ist als der Durchmesser des Wicklungsdrahtes. Somit ist jede Windung von der vorhergehenden Windung nach außen, insbesondere also radial, beabstandet. Der Abstand beträgt ein Vielfaches des Wicklungsdrahtdurchmessers, wobei der Abstandswert von den vom äußeren Spulenrand zur Mitte der Spule monoton steigt, insbesondere streng monoton steigt. Das Vielfache bedeutet beispielsweise das Dreifache oder ein Mehrfaches. Der Abstand zwischen aufeinander folgenden Windungen der jeweiligen Teilwicklung nimmt also von außen nach innen zu, weil die zwischen zwei aufeinander folgenden Windungen der jeweiligen Teilwicklung eingeschlossene Fläche jeweils denselben Wert aufweist.

Als Wicklungsdraht wird Rundlitze verwendet. Die räumliche Ausdehnung dieser Litze ist somit nicht vernachlässigbar und im Bereich des Wicklungsdrahtes jeder Windung ist das von der Wicklung erzeugte Magnetfeld weniger homogen als im Bereich zwischen den Windungen.

Wie in Figur 2 gezeigt, ist durch Ausführen der Wicklung mittels zweier Teilwicklungen (20, 21) ein homogenerer Magnetfeldverlauf über die bewickelte Fläche erreichbar und ein halb so großer Abstand, wobei allerdings doppelt so viel Wicklungsdraht einzusetzen ist. Denn im Bereich des Wicklungsdrahtes der Windung einer ersten Teilwicklung erzeugt die andere Teilwicklung einen homogeneren Magnetfeldverlauf als die erste Teilwicklung. Allerdings verläuft die andere Teilwicklung stets innerhalb der ersten Teilwicklung, wodurch die Induktivität der Teilwicklungen verschieden ist.

Wie in Figur 3 gezeigt, werden bei den entsprechend der Figur 2 vorgesehenen Teilwicklungen erfindungsgemäß zusätzlich Überkreuzungen der Wicklungsdrähte der beiden Teilwicklungen vorgesehen. Dabei sind die Wicklungsdrähte gegeneinander elektrisch isoliert und es entsteht ein sehr homogenes Magnetfeld über der Wicklungsfläche. Außerdem haben die beiden Teilwicklungen dieselbe Induktivität.

Jeder vollständigen Windung sind zwei Überkreuzungen zugeordnet. Somit verläuft der Wicklungsdraht einer Windung einer Teilwicklung für eine halbe Windung innerhalb und für die andere halbe Windung außerhalb der entsprechenden Windung der andere Teilwicklung.

Mit Ausnahme der Überkreuzungsbereiche und der Bereiche der Herausführung und/oder Eckenbereichen ist ein konstanter Abstand vorhanden. Die Windungsform, also der Verlauf der Windung, der einander entsprechenden Windungen der Teilwicklungen sind symmetrisch zueinander, insbesondere symmetrisch zu einer Ebene, die senkrecht auf der Wicklungsebene steht und die Überkreuzungsbereiche schneidet.

Im Bereich der insbesondere radialen Herausführung des Wicklungsdrahtes jeder Teilwicklung wird der Wicklungsdraht einer jeden Windung der zugehörigen ersten Teilwicklung stufenartig, also fast sprunghaft, auf einen jeweils größeren Radialabstand geführt. Die Zunahme des Radialabstandes ist in diesem Bereich jeweils sehr groß, insbesondere größer als entlang dem Wicklungsdraht vor oder nach den Bereich.

Zwar sind die Teilwicklungen in derselben Ebene anordenbar, jedoch ist im Überkreuzungsbereich eine Ausdehnung des Wickelraums senkrecht zu dieser Ebene notwendig. Entsprechendes gilt für den Bereich der Zuleitung und Ableitung.
Alternativ sind die beiden Teilwicklungen in zwei zueinander parallelen, aber voneinander beabstandeten Ebenen angeordnet.

Die beiden Teilwicklungen werden elektrisch parallel geschaltet, so dass der eingeprägte Wechselstrom sich gleichmäßig aufteilt in beide Teilwicklungen. Auch bei Einspeisung eines mittelfrequenten Wechselstroms ist wegen der Gleichheit der Induktivitäten eine gleichmäßige Aufteilung erreichbar.

Die Frequenz des eingeprägten Wechselstroms liegt vorzugsweise zwischen 10 kHz und 1 MHz.

Die Wicklung ist am Boden anordenbar, so dass ein Fahrzeug mit einer an ihm befestigten Sekundärwicklung über die Flachwicklung verfahrbar ist und durch die induktive Kopplung der Sekundärwicklung mit der Primärwicklungsanordnung, insbesondere also mit der Flachwicklung als Primärwicklung, Energie berührungslos, insbesondere auch galvanisch getrennt übertragbar ist.

Bei einem weiteren erfindungsgemäßen Ausführungsbeispiel ist statt der jeweiligen Ebene für die Wicklung eine Fläche verwendet, die räumlich gekrümmt verläuft.

Bei einem weiteren erfindungsgemäßen Ausführungsbeispiel sind statt der zwei Überkreuzungen pro Windung 2*n Überkreuzungen ausgeführt, insbesondere in Windungsrichtung voneinander gleichmäßig beabstandet, und/oder statt zwei Teilwicklungen mehr parallel geschaltete Teilwicklungen verwendet. Dabei ist n eine ganze Zahl. Die umwickelten Flächen der jeweiligen Teilwicklungen sind dabei ebenfalls gleich.

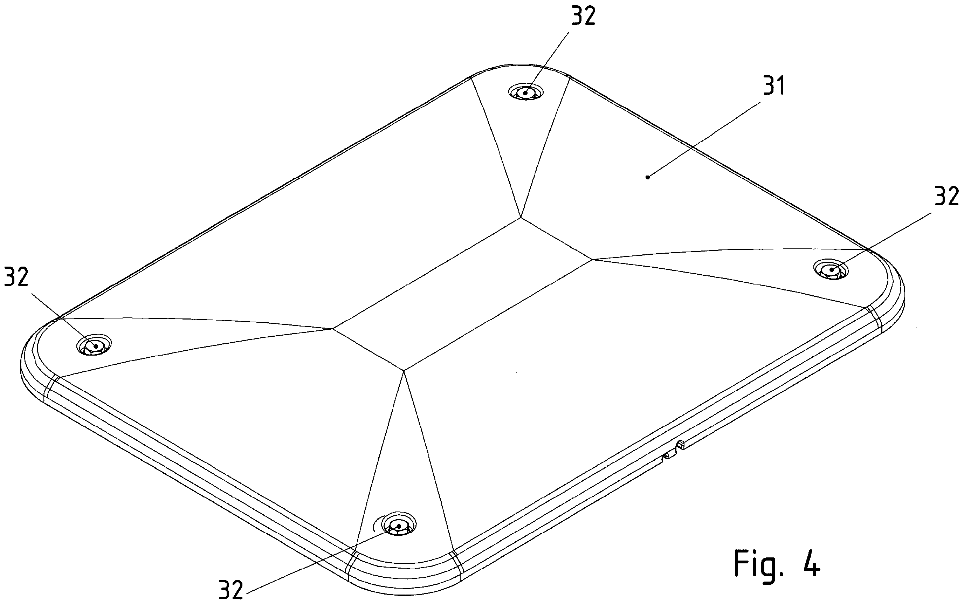

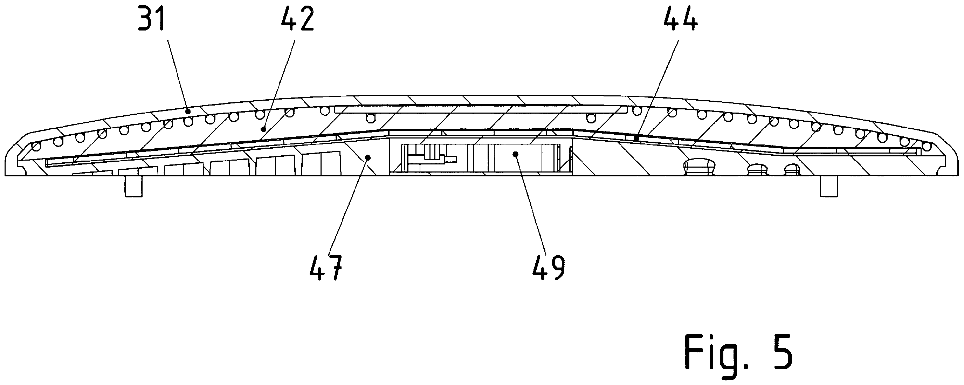

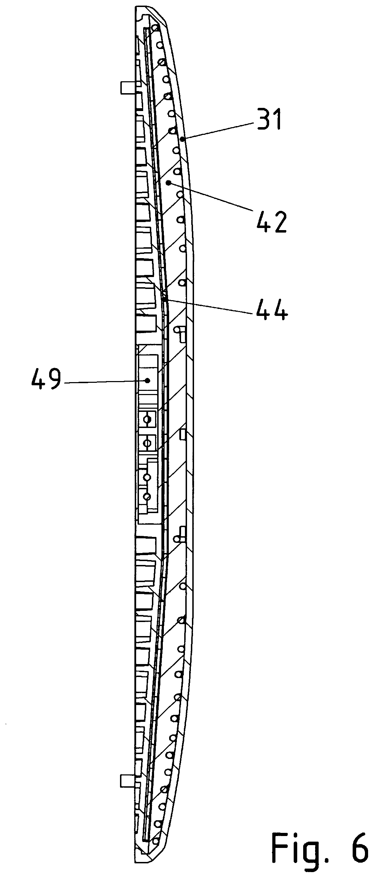

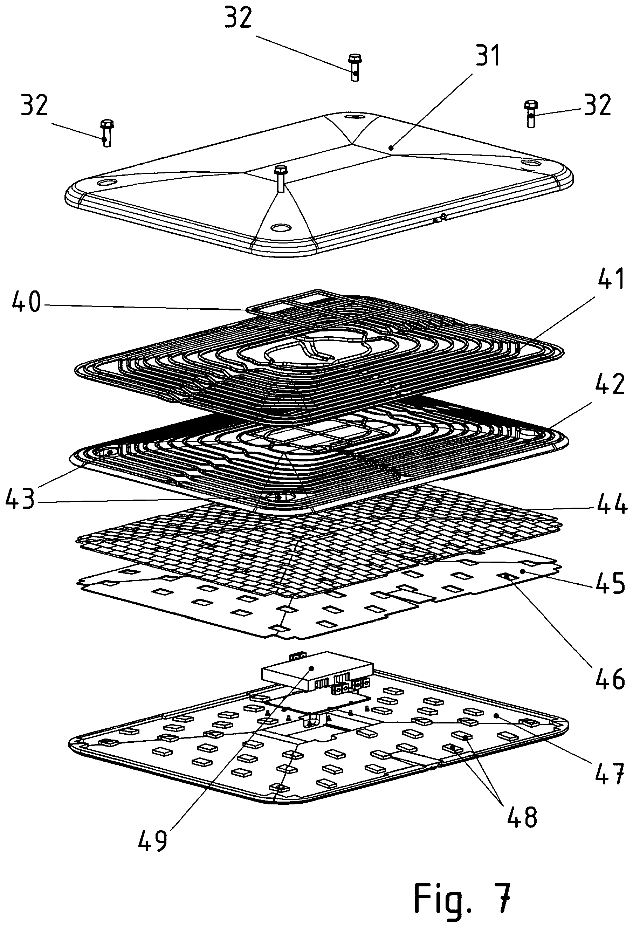

Wie in den Figuren 4 bis 7 gezeigt, ist das stationäre Teil der Ladestation, also die Primärwicklungsanordnung, abgedeckt durch ein Deckelteil 1, welches vorzugsweise aus Aluminium oder Kunststoff gefertigt ist und mittels Schrauben 2 in einer Gewindebohrung im Fundament oder in einem im Fundament befestigten Dübel eingeschraubt ist.

Das vorzugsweise aus Aluminium oder Kunststoff gefertigte Deckelteil 1 schützt somit die unter ihm sich befindende Primärleiterwicklungsanordnung 41 und eine Rahmenantenne 40 für Datenübertragung.

Die Primärleiterwicklungsanordnung 41 ist in einem Wicklungsträger 42 vorgesehen, der zur Aufnahme des Primärleiters einen Hinterschnitt 50 aufweist, so dass der Primärleiter 41 einklipsbar ist, insbesondere in entsprechende Schlitze oder Nuten.

Der Wicklungsträger 42 ist auf einer Schicht aus rechteckförmigen Ferritplatten 44 aufgesetzt, welche auf einem Träger 45 angeordnet sind, insbesondere aufgeklebt.

Der Träger 45 ist vorzugsweise aus Aluminium ausgeführt als magnetische Abschirmung.

Der Träger 45 und die Schicht aus Ferritplatten 44 weist rechteckförmige Lücken, also Ausnehmungen 46 auf, die deckungsgleich angeordnet sind. Dabei entspricht die Form der jeweiligen Lücke einer Ferritplatte.

Das Bodenteil 47 weist rechteckförmige Tragdome 48 auf, welche durch die Ausnehmungen 46 im Träger 45 und Lücken 80 in der Ferritplattenschicht 44 hindurchragen. Vorzugswiese ist zwischen den Tragdomen 45 und der Ferritplattenschicht 44 ein Luftspalt zum Ausgleich thermisch bedingter Längenänderungen.

Auf diese Weise wird bei Einleiten eines Gewichtskraftanteils eines auf dem Deckelteil 1 zumindest teilweise angeordneten, insbesondere geparkten, Fahrzeugs dieser Anteil vom Deckelteil 1 an den Wicklungsträger 42 weitergeleitet, ohne dass der Wicklungsdraht der Wicklungsanordnung verformt wird. Dieser Wicklungsdraht ist zwar aus HF-Litze, insbesondere Rundlitze, also aus einem Bündel von einzelnen gegeneinander elektrisch isolierter Einzeldrähte ausgeführt; jedoch ist der Wicklungsdraht mittels eines Hinterschnitts 50 formschlüssig in einer den Draht aufnehmenden Ausnehmung des Wicklungsträgers 42 aufgenommen. Diese Ausnehmung weist eine größere Querschnittsfläche auf als der Wicklungsdraht, so dass auch bei Verformung des Wicklungsträgers 46 unter Einfluss des Kraftanteils der Wicklungsdraht keiner Kraftwirkung ausgesetzt ist und keine Verformung des Wicklungsdrahtes, insbesondere des Querschnitts des Wicklungsdrahtes, erfolgt

Der Kraftanteil wird dann vom Wicklungsträger 42 über die Tragdome 48 des Bodenteils 47 weitergeleitet an die Bodenfläche 90.

Da die Tragdome 48 durch die Ausnehmungen 46 und durch die Lücken 80 hindurchragen, wird der Kraftanteil auch an der Ferritplattenschicht 44 vorbeigeleitet. Somit wird das spröde Material der Ferritplatten 44 nicht belastet.

Die jeweiligen Endbereiche des Wicklungsdrahtes sind dem Elektronikteil 49 zugeführt und dort mittels Anschlussvorrichtungen, insbesondere Anschlussklemmen, elektrisch verbunden mit der Schaltung des Elektronikteils 49.. Ebenso ist auch die Rahmenantenne mit dem Elektronikteil verbunden und ermöglicht auf diese Weise eine Signalübertragung zur Sekundärwicklung des Fahrzeugs..

Das Bodenteil 47 ist konvex gewölbt ausgeführt, so dass Wasser abfließt. Für eine einfache Fertigung ist hierbei ein Pyramidenstumpf verwendbar. Mittels der Wölbung ist auch ein Raumbereich schützbar, der der Aufnahme des Elektronikteils 49 ermöglicht.

Die Wicklungsanordnung weist zwei Teilwicklungen auf, deren Wicklungsdrähte sich an mehreren Stellen überkreuzen. Eine Teilmenge der Überkreuzungsstellen sind in einer Linie angeordnet, die von innen nach außen, also vom das Elektronikteil 49 aufnehmenden Innenbereich nach außen, also zum äußeren Umfang des Bodenteils 47 hin verläuft. Der Träger 42, insbesondere also wicklungsträger, weist entsprechend verlaufende Vertiefungen auf, in welchen die Überkreuzungen aufgenommen sind. Diese Vertiefungen ermöglichen daher auch einen Abfluss von Wasser. Denn die Vertiefungen sind derart breit ausgeführt, dass Wasser auch um die Überkreuzungen herum in der jeweiligen Vertiefung abfließen kann.

Die Ferritplattenschicht besteht aus in Reihen hintereinander aufgereiht angeordneten Ferritplatten 44, wobei die Ferritplatten 44 von je zwei zueinander direkt benachbarten Reihen einen Versatz zueinander aufweisen. Zum Reihenabschluss sind an den Endbereichen jeder zweiten Reihe im Vergleich zu den ansonsten gleichartigen Ferritplatten 44 halb so lange Ferritplatten verwendet. Der Versatz entspricht im Wesentlichen einer halben plattenlänge.

Die Lücken 80 zum Durchlass der Tragdome 48 sind derart weit voneinander entfernt, dass zumindest zwei Ferritplatten 44 zwischenordenbar sind. Die Form der jeweiligen Lücke 80 entspricht einer der gleichartigen Ferritplatten 44.

Bei einem weiteren erfindungsgemäßen Ausführungsbeispiel sind statt der zwei Überkreuzungen pro Windung 2*n Überkreuzungen ausgeführt, insbesondere in Windungsrichtung voneinander gleichmäßig beabstandet, und/oder statt zwei Teilwicklungen mehr parallel geschaltete Teilwicklungen verwendet. Dabei ist n eine ganze Zahl. Die umwickelten Flächen der jeweiligen Teilwicklungen sind dabei ebenfalls gleich.

### Bezugszeichenliste

1 Wicklungsdraht
20 Wicklungsdraht der ersten Teilwicklung
21 Wicklungsdraht der zweiten Teilwicklung
31 Deckelteil
32 Schraube
40 Rahmenantenne für Datenübertragung
41 Primärleiterwicklungsanordnung
42 Wicklungsträger
43 Ausnehmung für Schraube 2
44 Ferritplatten
45 Träger für Ferritplatten 44
46 Ausnehmung
47 Bodenteil
48 Tragdom
49 Elektronikteil
50 Hinterschnitt
80 Lücke, Ausnehmung
90 Bodenfläche
100 Feldlinie, optional
101 Feldlinie, optional

## Patentansprüche

1. Vorrichtung,
wobei die Vorrichtung
- ein Deckelteil (31),
- einen Wicklungsträger (42),
- eine Wicklungsanordnung,
- eine Ferritschicht,
- einen Träger und
- ein Bodenteil (47)
aufweist,
wobei die Wicklungsanordnung in dem Wicklungsträger (42) aufgenommen ist,
wobei
der Wicklungsträger (42) zwischen dem Deckelteil (31) und der Ferritschicht angeordnet ist, welche Ausnehmungen (80) aufweist,
wobei die Ferritschicht auf einem Träger angeordnet ist, der auf einem Bodenteil (47) angeordnet ist,
wobei am Bodenteil (47) Tragdome (48) ausgeformt sind, welche durch die Ausnehmungen (80) der Ferritschicht hindurchragen und den Wicklungsträger (42) und/oder das Deckelteil (31) tragen.

2. Vorrichtung nach Anspruch 1,
wobei
- das Deckelteil (31)
- der Wicklungsträger (42)
- der Träger und
- das Bodenteil (47)
aus elektrisch isolierendem Material gefertigt sind.

3. Vorrichtung nach mindestens einem der vorangegangenen Ansprüche,
wobei
der Wicklungsträgers (42) Vertiefungen aufweist, in welche der Wicklungsdraht (1) der Wicklungsanordnung eingeklipst ist.

4. Vorrichtung nach mindestens einem der vorangegangenen Ansprüche,
wobei
das Bodenteil (47) eine Ausnehmung aufweist, in welcher ein Elektronikteil (49) angeordnet ist.

5. Vorrichtung nach mindestens einem der vorangegangenen Ansprüche,
wobei
die Ausnehmungen (46) und Tragdome (48) in einer regelmäßigen flächigen Gitterstruktur angeordnet sind, wobei die Gitterstruktur aus zueinander parallelen, voneinander regelmäßig beabstandeten Reihen gebildet ist, wobei die Beabstandung innerhalb der jeweiligen Reihe gleichmäßig ist und zueinander nächstbenachbarte Reihen jeweils einen Versatz in Erstreckungsrichtung der Reihe um eine halbe Gitterkonstante zueinander aufweisen.

6. Vorrichtung nach mindestens einem der vorangegangenen Ansprüche,
wobei
die Wicklungsanordnung Überkreuzungen von Wicklungsdrähten aufweist, die in jeweiligen Vertiefungen im Wicklungsträger (42) angeordnet sind, wobei die vertikale Höhe der Vertiefungen vom äußeren Rand des Wicklungsträgers (42) nach innen monoton ansteigt.

7. Vorrichtung nach mindestens einem der vorangegangenen Ansprüche,
wobei
die Ferritschicht im Wesentlichen aus gleichartigen Ferritplatten aufgebaut ist,
wobei die Ferritplatten in zueinander parallel angeordneten Reihen angeordnet sind, wobei die in direkt zueinander benachbarten Reihen die Ferritplatten einen Versatz aufweisen.

8. Vorrichtung nach mindestens einem der vorangegangenen Ansprüche,
wobei
Wicklungsträger (42) und Bodenteil (47) einstückig ausgeführt sind.

9. Vorrichtung nach mindestens einem der vorangegangenen Ansprüche,
wobei
die Wicklungsanordnung Windungen aufweisende Teilwicklungen aufweist,
wobei jeder Windung einer ersten Teilwicklung eine Windung einer zweiten Teilwicklung zugeordnet ist,
wobei jede Windung der ersten Teilwicklung eine Anzahl von Überkreuzungen mit der zugeordneten Windung der zweiten Teilwicklung aufweist.

10. Anordnung zur berührungslosen Energieübertragung an ein Elektro-Fahrzeug, mit einer Vorrichtung nach mindestens einem der vorangegangenen Ansprüche,
wobei die Anordnung
- die Vorrichtung,
- eine Wechselstromquelle und
- das Fahrzeug
aufweist,
wobei
von einer Wechselstromquelle ein Wechselstrom in die Teilwicklungen, welche zueinander parallel geschaltet sind, einprägbar ist,
wobei das Fahrzeug an seiner Unterseite eine Sekundärwicklung aufweist, welche induktiv koppelbar ist an die Wicklungsanordnung.

## Claims

1. A device,
wherein the device has
- a cover part (31),
- a winding support (42),
- a winding arrangement,
- a ferrite layer,
- a support and
- a base part (47),
wherein the winding arrangement is received in the winding support (42),
wherein
the winding support (42) is arranged between the cover part (31) and the ferrite layer, which has cutouts (80),
wherein the ferrite layer is arranged on a support which is arranged on a base part (47),
wherein supporting domes (48) are formed on the base part (47), which domes protrude through the cutouts (80) in the ferrite layer and bear the winding support (42) and/or the cover part (31).

2. A device according to Claim 1,
wherein
- the cover part (31),
- the winding support (42),
- the support and
- the base part (47)
are manufactured from electrically insulating material.

3. A device according to at least one of the preceding claims,
wherein
the winding support (42) has depressions into which the winding wire (1) of the winding arrangement is clipped.

4. A device according to at least one of the preceding claims,
wherein
the base part (47) has a cutout in which an electronics part (49) is arranged.

5. A device according to at least one of the preceding claims,
wherein
the cutouts (46) and supporting domes (48) are arranged in a regular two-dimensional grid structure, wherein the grid structure is formed from rows which are parallel to each other and regularly spaced apart from each other, wherein the spacing within the respective row is uniform, and rows which are next adjacent to each other in each case have an offset by a half grid constant from each other in the direction of extent of the row.

6. A device according to at least one of the preceding claims,
wherein
the winding arrangement has crossovers of winding wires which are arranged in respective depressions in the winding support (42), wherein the vertical height of the depressions increases monotonically from the outer edge of the winding support (42) inwards.

7. A device according to at least one of the preceding claims,
wherein
the ferrite layer is constructed substantially of ferrite plates of the same type,
wherein the ferrite plates are arranged in rows arranged parallel to each other, wherein the in rows directly adjacent to each other the ferrite plates have an offset [sic].

8. A device according to at least one of the preceding claims,
wherein
the winding support (42) and base part (47) are formed in one piece.

9. A device according to at least one of the preceding claims,
wherein
the winding arrangement has part windings which have turns,
wherein a turn of a second part winding is associated with each turn of a first part winding,
wherein each turn of the first part winding has a number of crossovers with the associated turn of the second part winding.

10. An arrangement for contactless power transmission to an electric vehicle, with a device according to at least one of the preceding claims,
wherein the arrangement has
- the device,
- an AC supply and
- the vehicle,
wherein
an alternating current can be injected into the part windings, which are connected in parallel with each other, by an AC supply,
wherein the vehicle has on its underside a secondary winding which can be inductively coupled to the winding arrangement.

## Revendications

1. Dispositif,
sachant que le dispositif présente
- un élément de recouvrement (31),
- un support d'enroulement (42),
- un ensemble d'enroulement,
- une couche de ferrite,
- un support et
- un élément de base (47),
sachant que l'ensemble d'enroulement est logé dans le support d'enroulement (42), sachant que le support d'enroulement (42) est disposé entre l'élément de recouvrement (31) et la couche de ferrite, qui présente des évidements (80),
sachant que la couche de ferrite est disposée sur un support qui est disposé sur un élément de base (47),
sachant que des dômes porteurs (48) sont formés sur l'élément de base (47), qui font saillie à travers les évidements (80) de la couche de ferrite et portent le support d'enroulement (42) et/ou l'élément de recouvrement (31).

2. Dispositif selon la revendication 1, sachant que
- l'élément de recouvrement (31)
- le support d'enroulement (42)
- le support et
- l'élément de base (47)
sont fabriqués en un matériau électriquement isolant.

3. Dispositif selon au moins une des revendications précédentes, sachant que le support d'enroulement (42) présente des renfoncements dans lesquels est clipsé le fil métallique d'enroulement (1) de l'ensemble d'enroulement.

4. Dispositif selon au moins une des revendications précédentes, sachant que l'élément de base (47) présente un évidement dans lequel est disposé un élément électronique (49).

5. Dispositif selon au moins une des revendications précédentes, sachant que les évidements (46) et les dômes porteurs (48) sont disposés en une structure de réseau plane et régulière, sachant que la structure de réseau est formée de rangées mutuellement parallèles et régulièrement espacées entre elles, sachant que l'espacement à l'intérieur de chaque rangée est uniforme et que des rangées immédiatement voisines entre elles présentent chaque fois un décalage mutuel d'une demi-constante de réseau dans la direction de développement de la rangée.

6. Dispositif selon au moins une des revendications précédentes, sachant que l'ensemble d'enroulement présente des croisements de fils métalliques d'enroulement qui sont disposés dans des renfoncements respectifs dans le support d'enroulement (42), sachant que la hauteur verticale des renfoncements augmente de façon monotone du bord extérieur du support d'enroulement (42) vers l'intérieur.

7. Dispositif selon au moins une des revendications précédentes, sachant que la couche de ferrite est constituée pour l'essentiel de plaques de ferrite de même type, sachant que les plaques de ferrite sont disposées en rangées disposées parallèlement entre elles, sachant que, dans des rangées directement voisines entre elles, les plaques de ferrite présentent un décalage.

8. Dispositif selon au moins une des revendications précédentes, sachant que le support d'enroulement (42) et l'élément de base (47) sont réalisés d'un seul tenant.

9. Dispositif selon au moins une des revendications précédentes, sachant que l'ensemble d'enroulement présente des enroulements partiels présentant des spires, sachant qu'une spire d'un deuxième enroulement partiel est associée à chaque spire d'un premier enroulement partiel, sachant que chaque spire du premier enroulement partiel présente un certain nombre de croisements avec la spire associée du deuxième enroulement partiel.

10. Système pour transférer de l'énergie sans contact à un véhicule électrique, avec un dispositif selon au moins une des revendications précédentes, sachant que le système présente
- le dispositif,
- une source de courant alternatif et
- le véhicule,
sachant qu'une source de courant alternatif peut injecter un courant alternatif dans les enroulements partiels, qui sont montés en parallèle les uns par rapport aux autres, sachant que le véhicule présente sur le dessous un enroulement secondaire qui peut être couplé par induction à l'ensemble d'enroulement.
